Europäisches Patentamt

(19) European Patent Office

Office européen des brevets

(11) Numéro de publication : **0 204 621**
**B1**

(12) **FASCICULE DE BREVET EUROPÉEN**

(45) Date de publication du fascicule du brevet :
**15.03.89**

(21) Numéro de dépôt : **86401145.7**

(22) Date de dépôt : **29.05.86**

(51) Int. Cl.⁴ : **F 16 D 7/02**, B 60 R 25/02,
B 62 D 1/10

(54) **Dispositif de blocage de rotation à limitation de couple pour colonne de direction de véhicule automobile.**

(30) Priorité : **31.05.85 FR 8508262**

(43) Date de publication de la demande :
**10.12.86 Bulletin 86/50**

(45) Mention de la délivrance du brevet :
**15.03.89 Bulletin 89/11**

(84) Etats contractants désignés :
**DE GB IT NL SE**

(56) Documents cités :
**EP--A-- 0 129 522**
**CH--A-- 368 345**
**FR--A-- 1 020 290**
**FR--A-- 1 419 285**
**FR--A-- 2 057 347**
**FR--A-- 2 319 796**
**GB--A-- 294 034**
**GB--A-- 996 932**
**US--A-- 3 230 739**
**US--A-- 4 041 730**

(73) Titulaire : **NACAM Société dite:**
**Route de Blois**
**F-41100 Vendome (FR)**

(72) Inventeur : **Haldric, Bernard**
**15 rue Charles Lindberg**
**F-41100 Vendome (FR)**
Inventeur : **Benedi, Grégorio**
**6 bis rue du 20ème Chasseur**
**F-41100 Vendome (FR)**
Inventeur : **Baudon née Chardon, Sylvie**
**3 rue Edgar Degas**
**Naveil F-41100 Vendome (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

**Description**

La présente invention est relative aux colonnes de direction pour véhicules automobiles et se rapporte plus particulièrement aux dispositifs de blocage à limitation de couple pour colonne de direction.

On connaît des dispositifs de blocage sans limitation de couple qui comportent une serrure de blocage en rotation de la colonne par immobilisation de celle-ci à l'aide d'un pêne coopérant avec une gâche solidaire de la colonne. Les dispositifs de ce type ont le défaut d'être détruits si le couple appliqué au volant porté par la colonne est suffisant pour provoquer la torsion ou la rupture du pêne de la serrure, ou encore le dégagement du pêne hors de la gâche.

Avec les dispositifs sans limitation de couple, il est donc possible de libérer l'arbre de direction et, par conséquent, le volant du véhicule.

De plus, la destruction du dispositif de blocage provoque dans les pièces de celui-ci des déformations qui risquent de causer un blocage intempestif de la colonne de direction.

Afin de remédier à ces inconvénients on a proposé des dispositifs de blocage à limitation de couple qui autorisent la rotation de l'arbre sans destruction des pièces, à partir d'un certain couple de rotation appliqué au volant, ce couple étant toutefois suffisamment élevé pour interdire la conduite du véhicule.

Parmi les dispositifs de blocage de ce second type, on connaît les dispositifs à friction comportant un manchon pourvu d'une fente pour l'introduction d'un pêne de blocage. Le manchon est monté sur l'arbre de la colonne de direction par l'intermédiaire d'une troisième pièce telle qu'un ressort, des rondelles élastiques, etc... qui détermine la valeur de l'effort de friction à vaincre pour pouvoir tourner l'arbre par rapport au manchon.

On connaît également les dispositifs de blocage à désaccouplement de secteurs dentés.

Un tel dispositif comporte une douille liée à l'arbre de la colonne de direction et comportant à l'une de ses extrémités des dents radiales qui coopèrent avec les dents radiales correspondantes prévues sur un manchon fixe en rotation entourant l'arbre. Un ressort assure le maintien en contact des dentures de la douille et du manchon. Lorsque le couple appliqué à l'arbre atteint une valeur prédéterminée, les efforts sur les dentures ont une composante axiale qui provoque le déplacement axial du manchon et le désaccouplement de la colonne avec celui-ci pendant l'application de ce couple.

On a déjà proposé des dispositifs de blocage en rotation à limitation de couple pour colonne de direction de véhicule automobile utilisant un effet de coincement. C'est par exemple le cas de la demande de brevet européenne EP 0 129 522. Dans la solution exposée dans ce document, la colonne de direction, est équipée d'un manchon dans la surface extérieure duquel sont ménagés des logements destinés à recevoir le pêne d'une serrure de blocage et dont les extrémités de la surface intérieure sont munies de portées coniques contre lesquelles peuvent être pressées axialement des rondelles coniques de préférence en métal déformable qui fixent la valeur de frottement entre colonne et manchon.

L'invention vise à perfectionner les dispositifs de blocage à limitation de couple en créant un tel dispositif dont la construction nécessite un nombre de pièces inférieur au nombre de pièces entrant dans la construction des dispositifs connus.

L'invention a pour objet un dispositif de blocage de rotation à limitation de couple pour colonne de direction de véhicule automobile du type indiqué dans le préambule de la revendication principale ou figurent les éléments révélés par cette demande européenne.

Les particularités de l'invention ressortent notamment de la partie caractérisante de la revendication principale.

L'invention sera mieux comprise à la lecture de la description qui va suivre, faite en référence aux dessins annexés, donnés uniquement à titre d'exemples et sur lesquels :

- la Fig. 1 est une vue schématique en coupe d'un dispositif de blocage à limitation de couple suivant l'invention ;
- la Fig. 2 est une vue en élévation et en coupe du manchon entrant dans la construction du dispositif de blocage suivant l'invention ;
- la Fig. 3 est une vue en bout du manchon de la Fig. 2 ;
- la Fig. 4 est un graphique montrant la courbe du couple de frottement en fonction de la déformation ;
- la Fig. 5 est une vue en coupe d'un manchon pourvu d'un insert en matériau de friction, monté sur une portion d'arbre plein de section constante ;
- la Fig. 6 est une vue en coupe d'un manchon pourvu d'une garniture intérieure en matériau de friction monté sur une portion de section réduite d'un arbre plein de colonne de direction ;
- les Fig. 7 et 8 sont des vues en coupe de variantes respectives des agencements des Fig. 5 et 6 appliquées à des arbres tubulaires ;
- les Fig. 9 et 10 sont des vues en coupe de variantes respectives des agencements des Fig. 7 et 8 à inserts rapportés ;
- la Fig. 11 est une vue en coupe d'un dispositif suivant l'invention pourvu d'un manchon à deux portées de friction.

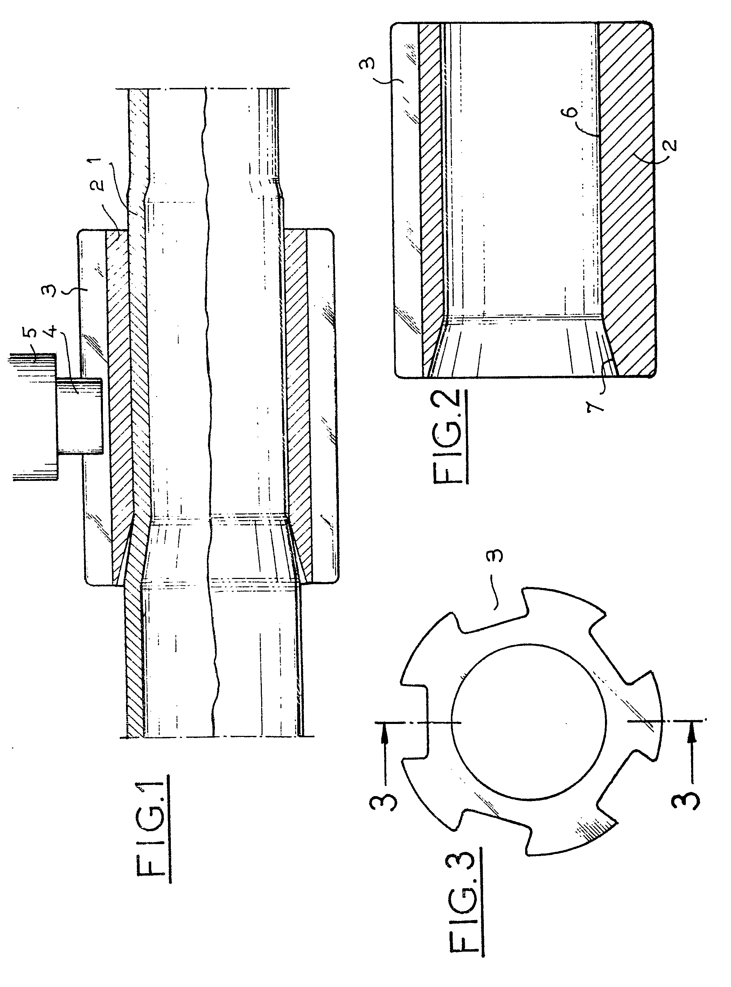

Le dispositif de blocage à limitation de couple représenté à la Fig. 1 comporte monté sur une portion tubulaire 1 d'un arbre de colonne de direction un manchon 2 en métal massif, de l'acier par exemple, pourvu dans sa surface extérieure de rainures 3 destinées à recevoir le pêne 4 d'une serrure 5 de blocage de la colonne en rotation.

Le manchon 2 est monté serré sur l'arbre 1 de manière à créer un frottement entre les deux pièces. Le couple de frottement est alors proportionnel au serrage qui est fonction des tolérances des pièces. Mais, lorsque le couple de frottement désiré doit être compris dans un intervalle de valeurs très proches, les tolérances de fabrication des deux pièces doivent être très serrées, ce qui n'est pas compatible avec une fabrication de grande série économique.

Afin que le couple de frottement obtenu ne soit pas fonction des tolérances des pièces, suivant l'invention, les cotes de l'alésage interne du manchon 2 et de la section extérieure de la portion d'arbre 1 destiné à le recevoir, sont telles que le serrage provoque la déformation de la portion d'arbre 1 par le manchon massif 2 jusqu'à une valeur dépassant sa limite élastique, le serrage résiduel restant alors constant et dépendant uniquement de l'élasticité résiduelle du matériau constituant l'arbre et de la longueur du manchon en contact avec ledit arbre.

Pour obtenir la dispersion minimale sur le couple de frottement, la longueur du manchon 2 peut être modulée en fonction des caractéristiques du matériau de l'arbre 1.

Bien entendu, on peut également choisir la solution complémentaire qui consiste à provoquer la déformation plastique du manchon 2, alors que la cote de la portion d'arbre sur laquelle il est monté reste constante.

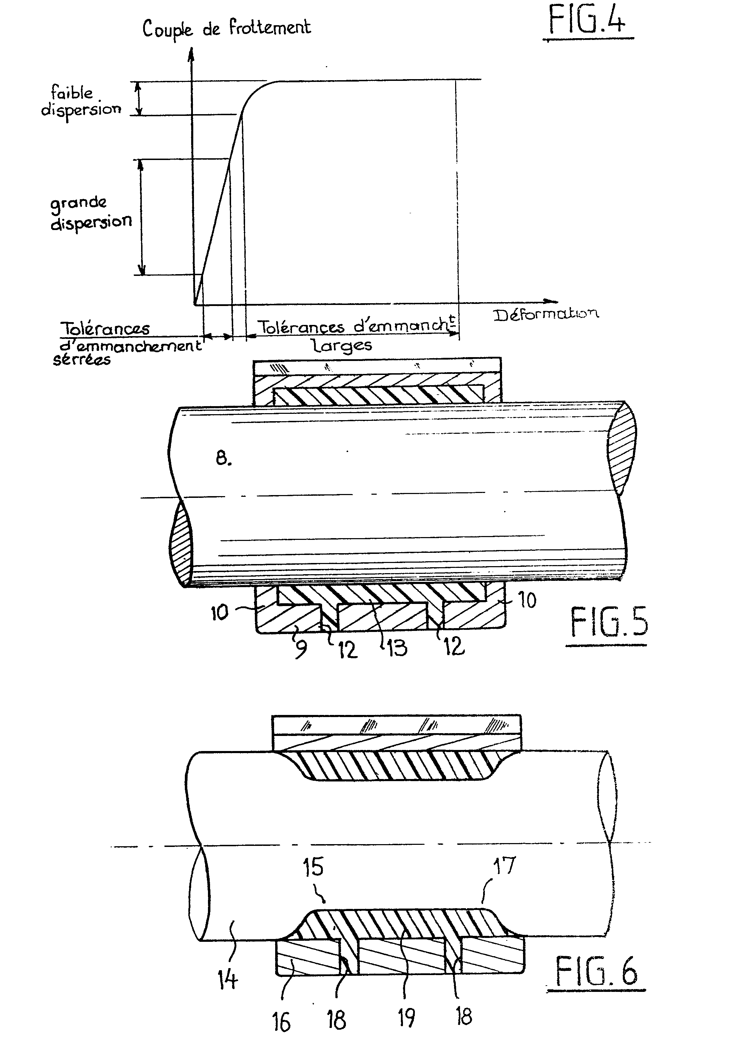

Sur la Fig. 4, on a représenté une courbe représentant la valeur du couple de frottement en fonction de la déformation obtenue de la manière décrite ci-dessus. Dans l'agencement représenté à la Fig. 1, l'élasticité résiduelle de l'arbre 1 permet d'assurer un frottement par serrage élastique entre l'arbre 1 et le manchon 2.

Lorsque l'arbre 1 de la colonne est réalisé plein, on provoque la déformation du manchon monté sur celui-ci.

Pour permettre de réaliser un montage à emmanchement serré, avec un serrage au-delà de la limite élastique de l'une des pièces, il est nécessaire que le diamètre extérieur de l'arbre 1, avant emmanchement, soit supérieur au diamètre intérieur de l'alésage 6 du manchon 2 d'une valeur au-delà des tolérances serrées normales.

Pour faciliter l'introduction du manchon 2 et surtout pour conserver un maximum d'élasticité résiduelle, celui-ci présente, comme représenté à la Fig. 2, un cône d'entrée intérieur 7 de faible pente, par exemple inférieur à 15°, ou une combinaison de cônes et/ou de rayons de telle sorte que le raccordement avec l'alésage satisfasse cette condition.

Afin que le cône d'entrée 7 du manchon 2 ne perturbe pas le fonctionnement du système et ne participe pas au couple de frottement, la mise en place du manchon est réalisée de la manière suivante. Tout d'abord, on emmanche le manchon 2 sur l'arbre 1 de la colonne jusqu'à une position déterminée, puis on le recule légèrement, par exemple de 5 mm. Ce recul permet de ne plus avoir de contact entre le cône d'entrée 7 du manchon, et l'arbre 1 de la colonne.

Sur la Fig. 5, on a représenté en coupe un dispositif de blocage suivant l'invention comprenant une portion d'arbre plein et de section constante d'une colonne de direction sur laquelle est monté un manchon 9 pourvu de deux rebords d'extrémité rentrants 10 et délimitant ainsi avec la surface extérieure de l'arbre 8 une chambre annulaire 11. Dans la surface latérale du manchon 9 sont ménagés des trous 12 par lesquels est injectée une matière plastique formant une garniture de friction 13. L'élasticité du manchon 9 fait office de ressort et la matière plastique sert à obtenir un coefficient de frottement constant.

Sur la Fig. 6 on a représenté un dispositif de blocage analogue à celui de la Fig. 5 et dans lequel la portion d'arbre plein 14 de la colonne de direction comporte une portion 15 de section réduite sur laquelle est disposé un manchon 16 dépourvu de rebords d'extrémité, le manchon 16 et la surface extérieure de la partie de diamètre réduit 15 de l'arbre 14 délimitant une chambre 17 dans laquelle une matière plastique de friction est injectée par des trous 18 ménagés dans la surface latérale du manchon 16. La matière plastique injectée forme ainsi une garniture de friction 19. Ici encore l'élasticité du manchon 16 fait office de ressort et la matière plastique de la garniture sert à obtenir un coefficient de frottement constant.

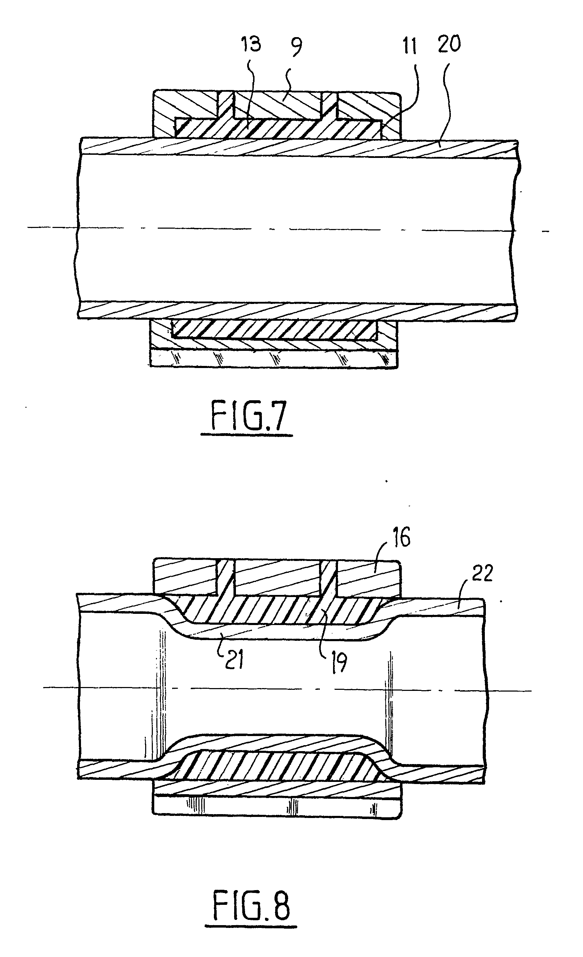

Le dispositif représenté à la Fig. 7 est analogue à celui de la Fig. 5, à l'exception du fait que le manchon 9 est monté sur une portion d'arbre 20 tubulaire. L'élasticité est alors obtenue par la déformation du tube provoquée par l'injection dans la chambre annulaire 11 de la matière plastique constituant la garniture 13.

Le dispositif de la Fig. 8 est analogue à celui de la Fig. 6 à l'exception du fait que le manchon 16 est monté sur une portion de section réduite 21, d'un arbre tubulaire 22. Ici encore, l'élasticité est obtenue par la déformation de la portion tubulaire provoquée par l'injection de la garniture de friction 19.

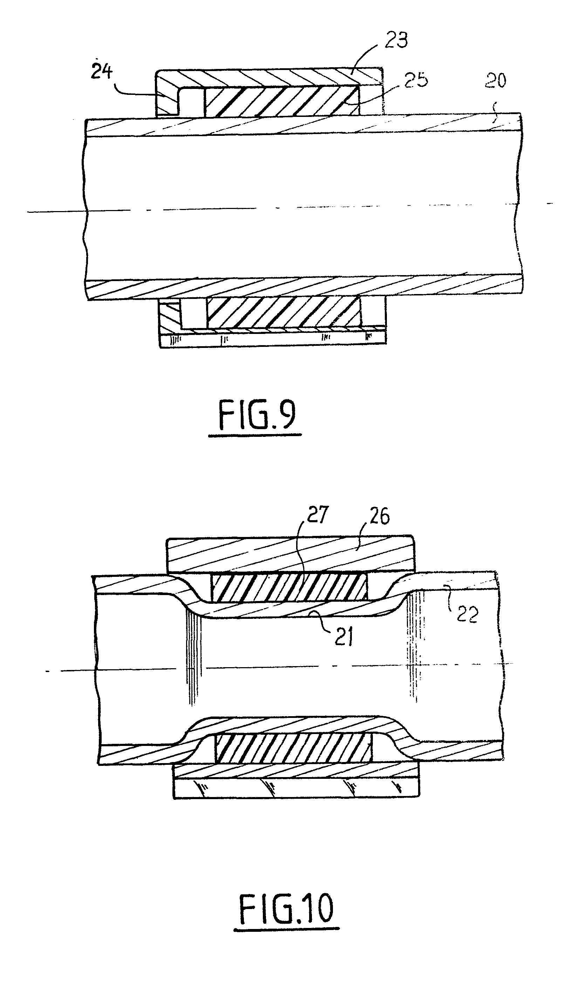

Le dispositif représenté à la Fig. 9 est une variante de celui de la Fig. 7 dans laquelle sur un arbre tubulaire 20 de section constante on dispose un manchon métallique 23 ouvert à l'une de ses extrémités et pourvu à son extrémité opposée d'un rebord rentrant 24. Entre le manchon 23 et l'arbre 20, on met en place un insert en matière plastique 25 dont le rôle est analogue à celui des garnitures 13 des modes de réalisation des Fig. 5 et 7.

Le dispositif de la Fig. 10 est une variante du dispositif de la Fig. 8 dans laquelle sur la partie 21 de section réduite d'un arbre tubulaire 22 est disposé un manchon 26, un insert rapporté 27 en matière plastique étant disposé dans la cavité délimitée par la surface extérieure de la partie rétrécie 21 de l'arbre et le manchon 26.

L'insert 27 peut avantageusement être constitué par une pièce tubulaire fendue pour faciliter sa mise en place sur la portion rétrécie 21 de l'arbre.

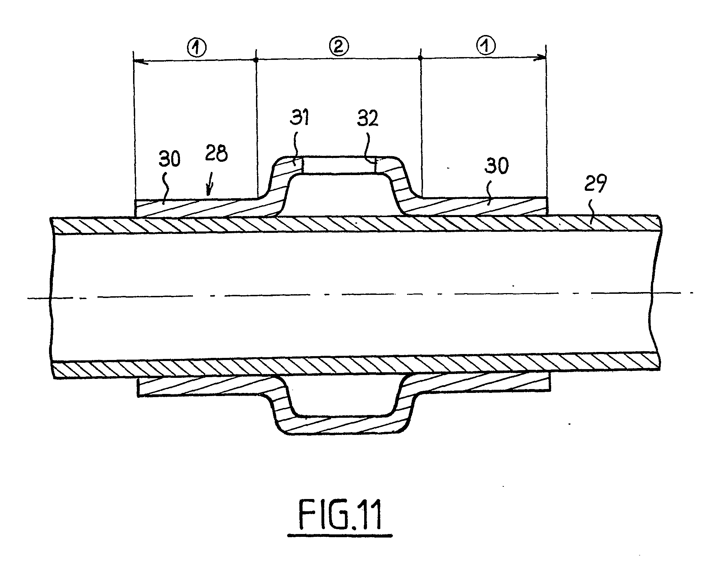

Le dispositif représenté à la Fig. 11 est constitué d'un manchon 25 monté directement sur un arbre 29 de section constante. Le manchon 28 comporte deux zones de portée 30 par lesquelles le manchon est engagé sur l'arbre 29 avec un serrage provoquant la déformation de l'arbre 29 dépassant sa limite élastique et une portion centrale 31 de plus grand diamètre dans laquelle sont ménagées des fentes 32 régulièrement réparties à la périphérie du manchon et destinées à recevoir le pêne de la serrure de blocage en rotation de la colonne (non représenté).

On voit donc que dans tous les modes de réalisation décrits ci-dessus, on obtient par déformation de la portion d'arbre de la colonne de direction ou par celle du manchon monté avec serrage sur une portion d'arbre, un couple de frottement entre ces deux pièces qui, comme le montre la Fig. 4 est déterminé par ladite déformation de manière à être pratiquement constant. On obtient donc, grâce à l'invention, un dispositif de blocage pour colonne de direction qui, tout en faisant appel à un nombre de pièces réduit au minimum permet d'assurer le blocage de la colonne et d'autoriser la rotation de celle-ci au-delà d'un couple exercé sur le volant qui peut être déterminé avec précision.

## Revendications

1. Dispositif de blocage de rotation à limitation de couple pour colonne de direction de véhicule automobile comprenant monté sur la colonne de direction (1 ; 8 ; 14 ; 20 ; 22 ; 29), un manchon (2 ; 9 ; 16 ; 23 ; 26 ; 28) dans la surface extérieure duquel sont ménagés des logements (3 ; 32) destinés à recevoir le pêne (4) d'une serrure (5) de blocage de ladite colonne, des moyens déformables déterminant la valeur de l'effort de friction à vaincre pour pouvoir tourner ladite colonne par rapport au manchon, caractérisé en ce que le manchon est monté sur la colonne avec un serrage provoquant la déformation de l'une au moins des deux pièces manchon et colonne jusqu'au dépassement de la limite élastique du matériau dont elle est constituée, le serrage résiduel restant alors constant et dépendant uniquement de l'élasticité résiduelle du matériau constituant la pièce déformée (1 ; 8 etc. où 2 ; 9 etc.) et de la longueur de l'autre pièce (2 ; 9 etc. où 1 ; 8 etc.) en contact avec ladite pièce déformée.

2. Dispositif de blocage suivant la revendication 1, caractérisé en ce que ledit serrage provoquant la déformation de l'une des pièces jusqu'au dépassement de la limite élastique du matériau dont elle est constituée est obtenu par un choix des cotes de la section intérieure du manchon (3 ; 29) et de la section extérieure de la portion de colonne (1 ; 29) destinée à le recevoir tel que la section intérieure dudit manchon soit inférieure à la section extérieure de ladite portion de colonne d'une valeur au-delà des tolérances serrées normales.

3. Dispositif de blocage suivant les revendications 1 et 2, caractérisé en ce que la surface intérieure du manchon (2) possède une combinaison de cônes et/ou de rayons de faible valeur.

4. Dispositif de blocage suivant la revendication 1, caractérisé en ce que ledit serrage provoquant la déformation plastique de l'une des pièces jusqu'au dépassement de la limite élastique du matériau dont elle est constituée est obtenu par interposition entre le manchon (9 ; 16 ; 23, 27) d'une garniture de friction (13 ; 19 ; 25 ; 27) qui détermine la valeur du couple de frottement du manchon sur l'arbre (8 ; 14 ; 20 ; 22) correspondant.

5. Dispositif de blocage suivant la revendication 4, caractérisé en ce que la portion de l'arbre (8 ; 14 ; 20 ; 22) de la colonne et le manchon (9 ; 16 ; 23 ; 26) sont conformés pour délimiter une chambre annulaire (11 ;17 ;15 ;21) et en ce que la garniture de friction est une matière plastique injectée ou rapportée dans cette chambre.

6. Dispositif de blocage suivant l'une des revendications 1 à 5, caractérisé en ce que ledit manchon (28) comporte deux portées d'extrémité (30) par lesquelles il est monté serré sur ladite portion d'arbre (29) de la colonne et une portion (31) de plus grand diamètre dans laquelle sont ménagées des fentes (32) de réception du pêne de la serrure de blocage.

7. Dispositif de blocage suivant l'une des revendications précédentes, caractérisé en ce que ladite portion d'arbre (1 ; 20 ; 22 ; 29) de la colonne est tubulaire et subit ladite déformation plastique.

8. Dispositif de blocage suivant l'une des revendications précédentes, caractérisé en ce que ladite portion d'arbre (8, 14) de la colonne est pleine, le manchon (9 ; 16) subissant ladite déformation plastique.

9. Dispositif de blocage suivant l'une des revendications précédentes, caractérisé en ce que la longueur du manchon est modulée en fonction des caractéristiques d'élasticité résiduelle de la pièce subissant la déformation élastique.

## Claims

1. An anti-rotation locking device with torque limitation for a steering column of a motor vehicle comprising, mounted on the steering column (1 ; 8 ; 14 ; 20 ; 22 ; 29), a sleeve (2 ; 9 ; 16 ; 23 ; 26 ; 28) in the outer surface whereof, there are arranged recesses (3 ; 32) intended to receive the bolt (4) of a means (5) for locking the said column, deformable means determining the value of the friction force to be overcome to make it possible to turn the said column in relation to the sleeve, characterised in that the sleeve is mounted on the column with a tight grip producing the deformation of at least one of the two component parts, the sleeve and column, until the elastic limit of the material whereof it is constituted is exceeded, the residual grip then remaining constant and depending solely on the residual elasticity of the material constituting the deformed part (1 ; 8 etc. or 2 ; 9 etc.) and on the length of the other part (2 ; 9 etc. or 1 ; 8 etc.) in contact with the said deformed part.

2. A locking device according to claim 1, characterised in that the said tight grip, producing the deformation of one of the part beyond the elastic limit of the material from which it is made, is obtained by a choice of the dimensions of the inner cross section of the sleeve (3 ; 29) and of the outer cross section of the column portion (1 ; 29) intended to receive it so that the inner cross section of the said sleeve is less than the outer cross section of the said column portion by a value exceeding the normal close tolerances.

3. A locking device according to claims 1 and 2, characterised in that the inner surface of the sleeve (2) has a combination of cones and/or radii of small value.

4. A locking device according to claim 1, characterised in that the said tight grip producing the plastic deformation of one of the part beyond the elastic limit of the material whereof it is constituted, is obtained by the interposition between the sleeve (9 ; 16 ; 23 ; 27) (and the shaft) of a friction lining (13 ; 19 ; 25 ; 27) which determines the value of the frictional torque of the sleeve on the corresponding shaft (8 ; 14 ; 20 ; 22).

5. A locking device according to claim 4, characterised in that the portion of the shaft (8 ; 14 ; 20 ; 22) of the column and the sleeve (9 ; 16 ; 23 ; 26) are shaped so as to delimit an annular chamber (11 ; 17 ; 15 ; 21) and in that the friction lining is a plastic material which is injected, or added, into this chamber.

6. A locking device according to one of claims 1 to 5, characterised in that the said sleeve (28) comprises two end bearing surfaces (30) wherewith it is mounted with a tight grip on the said shaft portion (29) of the column, and a portion (31) of larger diameter wherein there are arranged slots (32) for receiving the bolt of the locking means.

7. A locking device according to one of the preceding claims, characterised in that the said shaft portion (1 ; 20 ; 22 ; 29) of the column is tubular and undergoes the said plastic deformation.

8. A locking device according to one of the preceding claims, characterised in that the said shaft portion (8 ; 14) of the column is solid, the sleeve (9 ; 16) undergoing the said plastic deformation.

9. A locking device according to one of the preceding claims, characterised in that the length of the sleeve is adjusted according to the residual elasticity characteristics of the part undergoing the elastic deformation.

## Patentansprüche

1. Vorrichtung zur Sperrung der Drehung mit Momentbegrenzung für eine Kraftfahrzeuglenksäule, bestehend aus einer auf der Lenksäule (1 ; 8 ; 14 ; 20 ; 22 ; 29) angebrachten Hülse (2 ; 9 ; 16 ; 23 ; 26 ; 28), in deren äusseren Oberfläche Aussparungen (3 ; 32) zur Aufnahme des Riegels (4) eines Schlosses (5) zur Sperrung der genannten Säule ausgespart sind, und verformbaren Mitteln, die den Wert der zur Drehung der genannten Säule relativ zur Hülse zu überwindenden Reibungsbelastung festlegen, dadurch gekennzeichnet, dass die Hülse auf der Säule mit einer Klemmspannung angebracht ist, die die Verformung mindestens eines der beiden Teile, Hülse und Säule, bis zur Überschreitung der Elastizitätsgrenze des Materials, aus dem es besteht, bewirkt, wobei dann die Restspannung konstant bleibt und lediglich von der Restelastizität des Materials, aus dem das verformte Teil (1 ; 8 etc. oder 2 ; 9 etc.) besteht, und von der mit dem genannten verformten Teil in Berührung stehenden Länge des anderen Teils (2 ; 9 etc. oder 1 ; 8 etc.) abhängt.

2. Sperrvorrichtung nach Patentanspruch 1, dadurch gekennzeichnet, dass die genannte, die Verformung eines der Teile bis zur Überschreitung der Elastizitätsgrenze des Materials, aus dem es besteht, bewirkende Klemmspannung durch die Wahl der Abmessungen des inneren Querschnitts der Hülse (3 ; 29) und des äusseren Querschnitts des zu deren Aufnahme bestimmten Abschnitts der Säule (1, 29) dadurch erreicht wird, dass der innere Querschnitt der genannten Hülse um einen Wert kleiner ist als der äussere Querschnitt des genannten Abschnitts der Säule, der normale Klemmtoleranzen überschreitet.

3. Sperrvorrichtung nach den Patentansprüchen 1 und 2, dadurch gekennzeichnet, dass die innere Oberfläche der Hülse (2) eine Kombination von Konen und/oder Radien geringer Grösse aufweist.

4. Sperrvorrichtung nach Patentanspruch 1, dadurch gekennzeichnet, dass die genannte, die plastische Verformung eines der Teile bis zur Überschreitung der Elastizitätsgrenze des Materials, aus dem es besteht, bewirkende Klemmspannung durch Einfügen eines Reibbelages (13 ; 19 ; 25 ; 27) zwischen die Hülse (9 ; 16 ; 23 ; 26) erreicht wird, der den Wert des Momentes der Reibung der Hülse an der entsprechenden Welle (8 ; 14 ; 20 ; 22) bestimmt.

5. Sperrvorrichtung nach Patentanspruch 4, dadurch gekennzeichnet, dass der Abschnitt der Welle (8 ; 14 ; 20 ; 22) der Säule und die Hülse (9 ; 16 ; 23 ; 26) so ausgebildet sind, dass sie eine ringförmige Kammer (11 ; 17 ; 15 ; 21) begrenzen und dadurch, dass der Reibbelag ein in diese Kammer eingespritzter oder aufgesteckter Kunststoff ist.

6. Sperrvorrichtung nach einem der Patentansprüche 1 bis 5, dadurch gekennzeichnet, dass die genannte Hülse (28) zwei Endbereiche (30) aufweist, durch die sie auf dem genannten Wellenabschnitt (29) der Säule festgeklemmt ist, und einen Abschnitt (31) grösseren Durchmessers, in dem Schlitze (32) zur Aufnahme des Riegels des Sperrschlosses ausgespart sind.

7. Sperrvorrichtung nach einem der vorhergehenden Patentansprüche, dadurch gekennzeichnet, dass der genannte Abschnitt der Welle (1 ; 20 ; 22 ; 29) der Säule rohrförmig ist und der genannten plastischen Verformung unterliegt.

8. Sperrvorrichtung nach einem der vorhergehenden Patentansprüche, dadurch gekennzeichnet, dass der genannte Wellenabschnitt (8 ; 14) der Säule massiv ist, wobei die Hülse (9 ; 16) der genannten plastischen Verformung unterliegt.

9. Sperrvorrichtung nach einem der vorhergehanden Patentansprüche, dadurch gekennzeichnet, dass die Länge der Hülse in Abhängigkeit von den Daten der Restelastizität des der elastischen Verformung unterliegenden Teils gewählt wird.

FIG.1

FIG.3

FIG.2

EP 0 204 621 B1

FIG.4

Couple de frottement

faible
dispersion

grande
dispersion

Déformation

Tolérances
d'emmanchement
sérrées

Tolérances d'emmanch$^t$
Larges

8.

10          10

9    12    13    12

FIG.5

15          17

14

16    18    19    18

FIG.6

2

FIG.7

FIG.8

FIG.9

FIG.10

FIG.11

5